# EUROPÄISCHE PATENTSCHRIFT

(11) **EP 1 491 297 B1**
(45) Veröffentlichungstag und Bekanntmachung des Hinweises auf die Patenterteilung: **25.01.2006**
(21) Anmeldenummer: 04022748.0
(22) Anmeldetag: 13.11.1998
(51) Int. Cl.: B25H 3/02, B62B 1/12

(54) **Transportvorrichtung, insbesondere für Handhabungsgegenstände wie Werkzeuge, Instrumente od. dgl.**
Transport device especially for handling apparatus such as tools, instruments or the like
Dispositif de transport en particulier pour des appareils de manutention comme des outils, instruments ou analogue

(30) Priorität: 16.01.1998 DE 29800665 U; 28.09.1998 DE 19844372
(43) Veröffentlichungstag der Anmeldung: 29.12.2004
(62) Teilanmeldung aus: 98121190.7
(73) Patentinhaber: PARAT-WERK SCHÖNENBACH GmbH + Co KG, D-42897 Remscheid (DE)
(72) Erfinder: Pauser, Herbert Bernhard, 64283 Darmstadt (DE); Topel, Martin , Prof., 42781 Haan (DE)
(74) Vertreter: Ostriga, Sonnet, Wirths & Roche

(56) Entgegenhaltungen:
- GB-A- 746 995
- SE-B- 458 581
- US-A- 2 964 328
- US-A- 4 119 044
- US-A- 4 258 962
- US-A- 5 240 264

## Beschreibung

Die Erfindung betrifft eine Transportvorrichtung, insbesondere für Handhabungsgegenstände wie Werkzeuge, Instrumente od. dgl., mit zumindest einem Abteil für die zu transportierenden Gegenstände, die von einer Bodenwand, vier Seitenwänden und einer Deckenwand begrenzt ist sowie mit einem wenigstens als bodenseitige Auflage dienenden Unterbau für die Transportvorrichtung, wobei eine Verstellvorrichtung vorgesehen ist, die das Abteil und den Unterbau miteinander verbindet, und mittels derer das Abteil relativ zu dem Unterbau aus einer bodennahen Ruheposition in mindestens eine bodenferne Arbeitsposition höhenverstellbar ist.

Derartige Transportvorrichtungen sind bekannt und weit verbreitet. Bei einer druckschriftlich nicht belegbaren, als Werkzeugkoffer ausgebildeten Transportvorrichtung besteht der Unterbau aus vier, jeweils in Eckbereichen des Bodens angeordneten Rollen, so dass der Werkzeugkoffer fahrbar ist. Diese Transportvorrichtung erweist sich jedoch für manche Einsatzzwecke, insbesondere bei häufig wechselnden Arbeitsplätzen und Arbeitssituationen, als unpraktisch.

Die Erfindung geht aus von einer Transportvorrichtung gemäß der SE 458581. Hieraus ist eine transportable Servicebox in Form eines Schrankes bekannt, die auf dem Rücken eines Benutzers getragen werden kann. Der Schrank ist relativ zu einem Gestell höhenverstellbar.

Es ist Aufgabe der Erfindung, eine Transportvorrichtung gemäß dem Oberbegriff des Anspruchs 1 bereitzustellen, die einem Benutzer die Handhabung erleichtert.

Die Erfindung löst diese Aufgabe mit den Merkmalen des Anspruches 1.

Die in etwa mittige Anbringung eines Griffkörpers an der Deckenwand der Transportvorrichtung ist schwerpunktnah und erhöht somit die Kippstabilität beim Tragen. Die Ausbildung des Griffkörpers als Betätigungselement für die Höhenverstellung des Abteils kombiniert die Tragefunktion mit der Verstellfunktion. Dies vermeidet die Anbringung zusätzlicher Betätigungselemente.

Das Abteil mit den Handhabungsgegenständen kann man bei Bedarf in eine gegenüber dem Unterbau und damit dem Boden erhöhte Position bringen, aus der die Handhabungsgegenstände bequem entnehmbar, bzw. bequem erreichbar und bedienbar sind. Dabei wird insbesondere den Anforderungen eines im Außendienstbereich tätigen Benutzers, wie beispielsweise einem Service-Techniker, Rechnung getragen, der ständig an völlig unterschiedlichen Arbeitsplätzen tätig ist. So kann bei Tätigkeiten in Bodennähe, beispielsweise in liegender Position des Benutzers, das Abteil in der Ruheposition verbleiben, weil die im Abteil enthaltenen Gegenstände problemlos entnommen werden können. Muss der Benutzer jedoch während seiner Tätigkeit stehen oder gegebenenfalls sitzen, kann er die im Abteil befindlichen Gegenstände mühelos erreichen, wenn sich das Abteil in der Arbeitsposition befindet. Damit entfällt lästiges Bücken.

Gemäß einer vorteilhaften Ausführungsform der Erfindung umfasst die Verstelleinrichtung wenigstens eine am Unterboden befestigte Tragstange, an der das Abteil verschiebbar gehalten ist sowie einen Haltemechanismus, der das Abteil zumindest in der Arbeitsposition sichert. Dies hat den Vorteil, dass eine besonders einfach gestaltete Verstellvorrichtung vorgesehen ist, die prinzipiell eine stufenlose Höhenverstellung des Abteils relativ zu dem Unterbau ermöglicht. Bei einer entsprechenden Zahl von Haltepositionen ist eine individuell einstellbare Arbeitshöhe des Abteils vom Benutzer für verschiedene Arbeitssituationen wählbar.

Gemäß einer vorteilhaften Ausgestaltung der Erfindung ist der Haltemechanismus als Rastmechanismus ausgebildet, der das Abteil bei Erreichen seiner Arbeitsposition automatisch sichert. Diese besonders einfach ausgestaltete Ausführungsform sichert das Abteil in der Arbeitsposition automatisch, so dass der Benutzer das Abteil lediglich in die Arbeitsposition verstellen muss und keine zusätzlichen Handgriffe für die Arretierung ausführen muss.

Gemäß einer weiteren Ausgestaltung der Erfindung sind zwei voneinander beabstandete, parallel zueinander und unter einem spitzen Winkel zum Boden verlaufende Tragstangen vorgesehen. Dies bietet zum einen den Vorteil der erhöhten Stabilität. Zum anderen wird durch die winkelige Anordnung die bei der Höhenverstellung erfolgende Vertikalbewegung mit einer Horizontalbewegung überlagert. Auf diese Weise kann das Abteil bei entsprechender Ausrichtung der Transportvorrichtung bei Verstellung in die Arbeitsposition hin zum Benutzer bewegt werden, was die Handhabung weiter erleichtert.

Gemäß einer weiteren vorteilhaften Ausgestaltung der Erfindung sind die Tragstangen rohrförmig ausgebildet. Die Verstellvorrichtung umfasst zwei Rohre, die jeweils in den Tragstangen (Basisrohre) teleskopartig aufgenommen sind, wobei eine Bewegung des Abteils von der Ruhe- in die Arbeitsposition einer Relativbewegung der Mittelrohre zu den Basisrohren entspricht. Durch diese teleskopartige Ausbildung der Verstelleinrichtung wird die Stabilität der Vorrichtung weiter erhöht, weil nun auch das Mittelrohr mit dem Abteil verbunden werden kann, so dass ein zweiter (deckenseitiger) Aufhängepunkt für das Abteil an der Verstellvorrichtung geschaffen ist, ohne dass in der Ruheposition des Abteils die Tragstange aus den Umrissen des Abteils herausragen muss. Diese Ausführungsform zeichnet sich somit durch besondere Einfachheit aus.

Gemäß einer Ausführungsform der Erfindung schneidet die Verstellvorrichtung eine durch die Bodenwand der Transportvorrichtung definierte Ebene etwa im Bereich des Bodenwandrandes und eine durch die Deckenwand definierte Ebene etwa im Bereich des Griffkörpers. Auch diese Maßnahme erhöht die Stabilität.

Gemäß einer besonders vorteilhaften Ausgestaltung der Erfindung sind an dem Unterbau Rollen für einen fahrbaren Transport der Transportvorrichtung angebracht, wobei an der Verstellvorrichtung ein Zugelement angeordnet ist. Auf diese Weise wird der Verstellvorrichtung zusätzlich die Funktion eines Fahrwerkes zugeordnet.

Gemäß einer weiteren vorteilhaften Ausgestaltung der Erfindung sind am Abteil Rastmittel angeordnet, die bei in Ruheposition befindlichem Abteil mit Gegenrastmitteln am Unterbau zusammenwirken. Dies sorgt einerseits für eine erhöhte Stabilität der Transportvorrichtung sowie für eine besondere Abstützung des Abteils auf dem Unterbau. Andererseits kann auf vorteilhafte Weise verhindert werden, dass sich ein ausziehbar ausgebildeter Unterbau bei in Ruheposition befindlichem Abteil unbeabsichtigt herausziehen läßt. Dabei können insbesondere die Rastmittel und Gegenrastmittel formschlüssig ineinander sowie in die Bewegungsbahn des Unterbaus eingreifen. Wird die Transportvorrichtung beispielsweise von Hand getragen, so ist der herausziehbare Unterbau damit sicher arretiert.

Gemäß einer weiteren Ausgestaltung der Erfindung weist der Unterbau wenigstens eine Auflagefläche für Handhabungsgegenstände auf. Auf diese Weise kann eine zusätzliche Arbeitsfläche bereitgestellt werden, die dem Benutzer der Transportvorrichtung zusätzliche Arbeitserleichterungen bietet.

Weitere Vorteile der Erfindung ergeben sich aus den zusätzlichen, nicht zitierten Unteransprüchen sowie anhand der Beschreibung von in den Zeichnungen dargestellten Ausführungsbeispielen. In den Zeichnungen zeigen:
Fig. 1 eine erste Ausführungsform der Transportvorrichtung mit in Ruheposition befindlichem Abteil in perspektivischer Ansicht,
Fig. 2 die Transportvorrichtung gemäß Fig. 1 im Schnitt mit einem vollständig eingefahrenen Zugbügel,
Fig. 3 einen vergrößerten Ausschnitt gemäß Fig. 2 im Bereich der Rollen,
Fig. 4 die Transportvorrichtung gemäß Fig. 2, in einer gekippten Position mit vollständig ausgezogener Teleskopanordnung, wobei sich das Abteil in Ruheposition befindet,
Fig. 5 die Transportvorrichtung gemäß Fig. 2, bei dem das Abteil relativ zum Unterbau geringfügig nach oben verschoben ist, wobei der Zugbügel zusammen mit den Mittelrohren teilweise aus dem Abteil herausgezogen ist und wobei zur Stützung des Abteils der als Schublade ausgebildete Unterbau teleskopartig teilweise herausgezogen ist,
Fig. 6 die Transportvorrichtung gemäß Fig. 5, mit vollständig ausgefahrener Teleskopanordnung, wobei sich das Abteil in der Arbeitsposition befindet und der Unterbau vollständig ausgefahren ist,
Fig. 7 die Transportvorrichtung gemäß Fig. 6, bei dem der Zugbügel vollständig in das Abteil eingefahren ist und ein als Lade ausgebildeter Vorderabschnitt des Abteils zu einem nicht gezeigten Benutzer hin nach vorne abgeklappt ist,
Fig. 8 in perspektivischer Ansicht den als Schublade ausgebildeten Unterbau,
Fig. 9 einen Schnitt durch eine zweite Ausführungsform der Transportvorrichtung gemäß Fig. 2, bei der der Unterbau über ausklappbare Stützfüße verfügt, die sich in ihrer Ruheposition befinden,
Fig. 10 die Transportvorrichtung gemäß Fig. 9 mit ausgeklappten in Stützposition befindlichen Stützfüßen, einem in Arbeitsposition befindlichen Abteil und vollständig ausgefahrenem Zugbügel,
Fig. 11 eine vergrößerte Ausschnittsdarstellung der Transportvorrichtung gemäß Fig. 9,
Fig. 12 eine vergrößerte Ausschnittsdarstellung der Transportvorrichtung gemäß Fig. 11,
Fig. 13 ein drittes Ausführungsbeispiel der Transportvorrichtung mit in Ruheposition befindlichem Abteil in perspektivischer Ansicht, mit am Abteil angeordneten Rastmitteln und mit am Unterbau angeordneten Gegenrastmitteln,
Fig. 14 die Transportvorrichtung gemäß Fig. 13 mit in Arbeitsposition befindlichem Abteil, vollständig ausgefahrenem Zugbügel, aufgeklappter Lade und ausgezogenem Unterbau,
Fig. 15 eine teilgeschnittene Seitenansicht der Transportvorrichtung gemäß Fig. 13 im Bereich der Rollen bei in Ruheposition befindlichem Abteil, und
Fig. 16 die Transportvorrichtung gemäß Fig. 15 mit vollständig ausgefahrenem Unterbau und teilweise vertikal nach oben verlagertem Abteil 11.

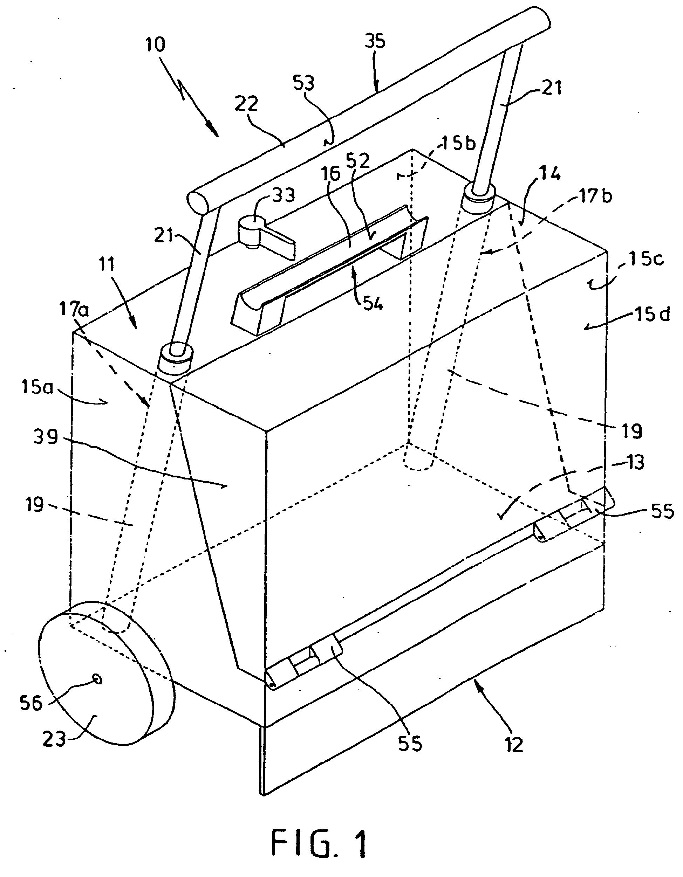

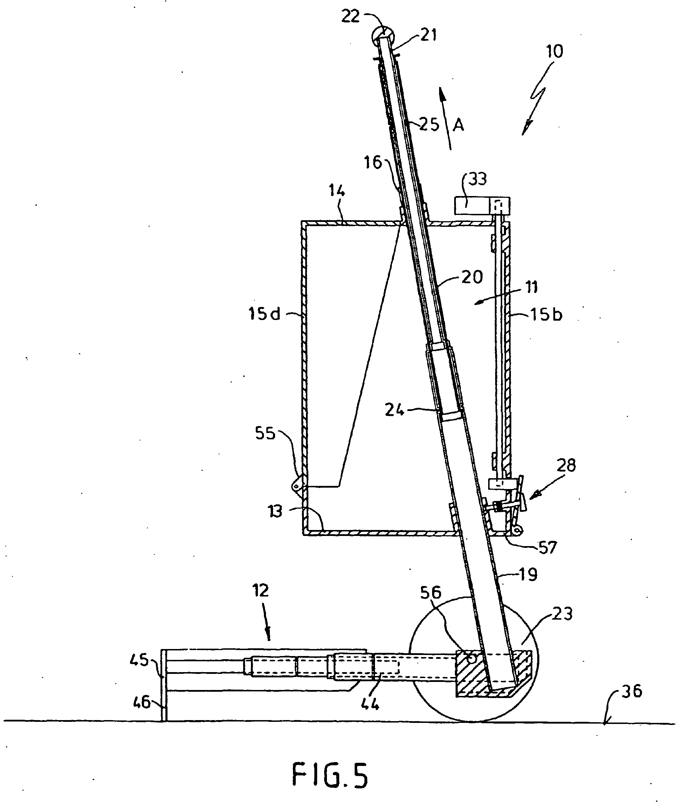

Die in den Figuren insgesamt mit 10 bezeichnete Transportvorrichtung umfasst einen als Abteil 11 ausgebildeten, kofferartigen Oberbau und einen beim ersten Ausführungsbeispiel gemäß den Fig. 1 bis 8 als ausziehbare Schublade ausgestalteten Unterbau 12. Das Abteil 11 wird von einer Bodenwand 13, einer Deckenwand 14 und vier Seitenwänden 15a, 15b, 15c, 15d begrenzt. An der Deckenwand 14 ist - etwa zentral - ein Griffkörper 16 angeordnet, an dem die Transportvorrichtung 10 u.a. von einem Benutzer getragen werden kann.

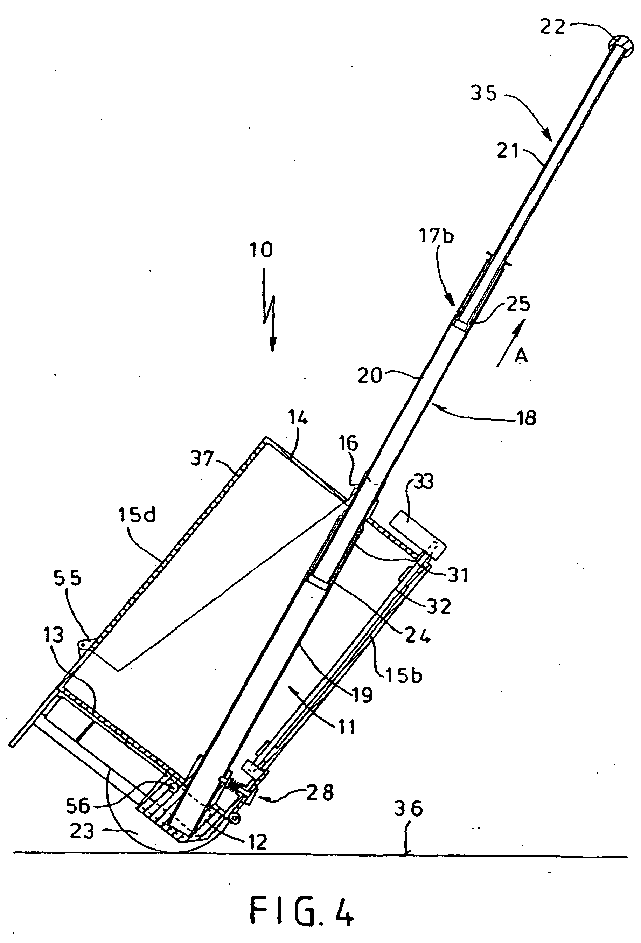

Innerhalb des Abteils 11, nahe den Seitenwänden 15a und 15c, sind die beiden Pfosten 17a, 17b einer Verstelleinrichtung 18 geführt, die jeweils drei teleskopartig ineinander aufgenommene Glieder 19, 20, 21 umfassen. Den Aufbau der Pfosten 17a, 17b erkennt man am besten in Fig. 4. Hier sind die drei teleskopartig verschiebbären Glieder, die Tragstange 19, die im folgenden als Basisrohr bezeichnet wird, das Mittelrohr 20 und das Kopfrohr 21 in jeweils maximal ausgefahrenem Zustand gezeigt.

Die beiden Kopfrohre 21 sind an ihrem der Bodenwand 13 fernen Ende mittels einer Querstrebe 22 miteinander verbunden. Kopfrohre 21 und Querstrebe 22 bilden auf diese Weise einen im wesentlichen U-förmigen Zugbügel 35, der in Fig. 1 geringfügig ausgefahren ist.

Das dem Unterbau 12 nahe Ende der Basisrohre 19 ist fest mit dem Unterbau 12 verbunden. Es tritt in einem dem Bodenwandrand 57 nahen Bereich der Bodenwand 13 in den Innenraum des Abteils 11 ein und durchgreift eine tüllenartige Führung 58, die fest mit der Bodenwand 13 des Abteils 11 verbunden ist. Die Länge der Basisrohre 19 entspricht in etwa der Höhe des Abteils 11. Die Mittelrohre 20 sowie die darin aufgenommenen Kopfrohre 21 durchgreifen die Deckenwand 14 des Abteils 11 etwa im Bereich des Griffkörpers 16. Sie durchstecken dabei auf analoge Weise eine tüllenartige Führung 59, die fest mit der Deckenwand 14 verbunden ist und der stabilen Aufhängung des Abteils 11 an der Verstellvorrichtung 18 dient.

Am Unterbau 12 sind zwei Rollen 23 angeordnet, die dem fahrbaren Transport der Transportvorrichtung 10 dienen. Für einen fahrbaren Transport muss die Transportvorrichtung 10 zunächst in eine gekippte Lage, wie beispielsweise in Fig. 4 dargestellt, gebracht werden. Dies wird später erläutert.

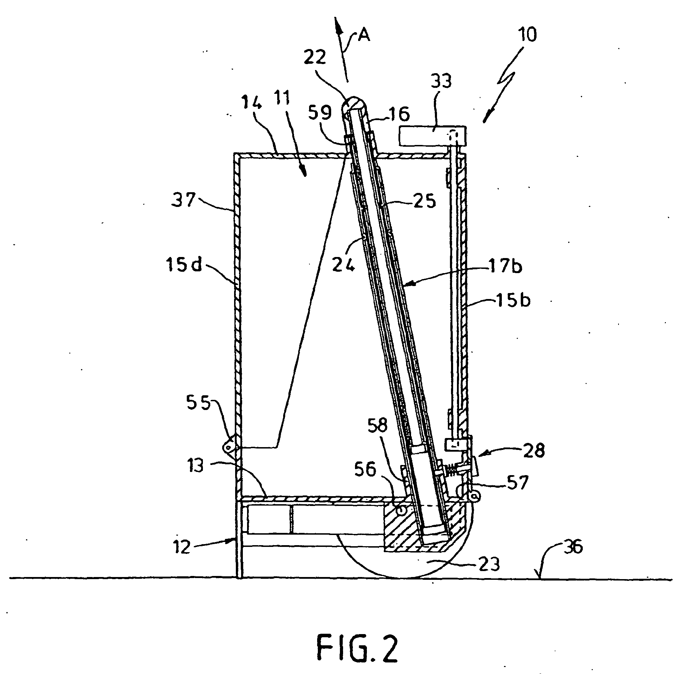

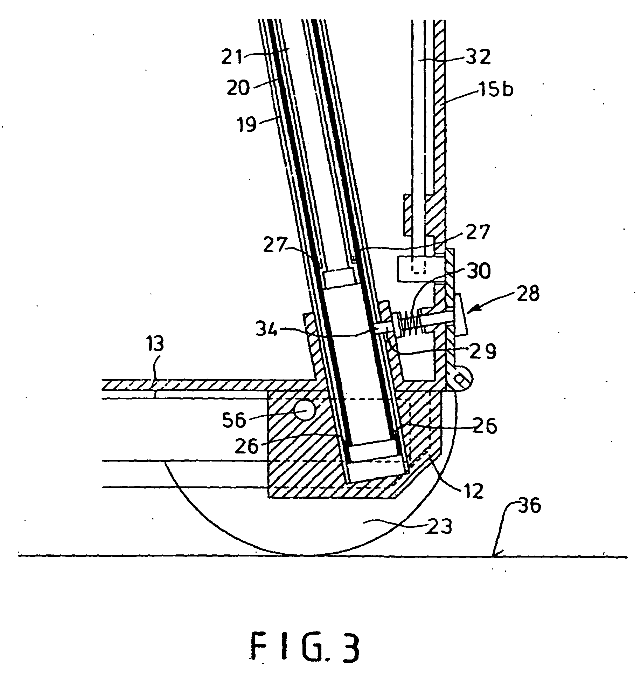

Der Zugbügel 35 kann in der Ruheposition des Abteils 11, die beispielsweise in den Fig. 1 und 2 dargestellt ist, so weit eingefahren werden, dass die Querstrebe 22 an dem Griffkörper 16 zur Auflage kommt. In dieser Anordnung hat die Transportvorrichtung 10 eine sehr kompakte Form und kann vom Benutzer, entsprechend einem Werkzeugkoffer, getragen werden. Für einen bequemeren, gefahrenen Transport, insbesondere bei schweren im Abteil 11 befindlichen Gegenständen, kann der Zugbügel 35 durch Zug an der Querstrebe 22 mit den Kopfrohren 21 und den Mittelrohren 20 in Ausfahrrichtung A ausgefahren werden. Die Ausfahrbewegung wird durch zwei Anschläge 24, 25 begrenzt, die mit entsprechenden Widerlagerflächen 26, 27 zusammenwirken, die an den jeweiligen der Bodenwand 13 nahen Enden der Mittelrohre 20 bzw. der Kopfrohre 21 angeordnet sind (s. Fig. 3). Die vollständig ausgefahrene Teleskopanordnung gemäß Fig. 4 ist langgestreckt ausgebildet, wodurch ein langer Hebelarm geschaffen ist, der eine Verkippung um die Rollenachse 56 erleichtert. Die Querstrebe 22 befindet sich in diesem ausgefahrenen Zustand in einer Höhe, in der sie für einen Benutzer bequem greifbar ist, so dass dieser die Transportvorrichtung 10 komfortabel ziehen oder schieben kann. Auf diese Weise wird der Transport besonders von schweren Gegenstände deutlich erleichtert.

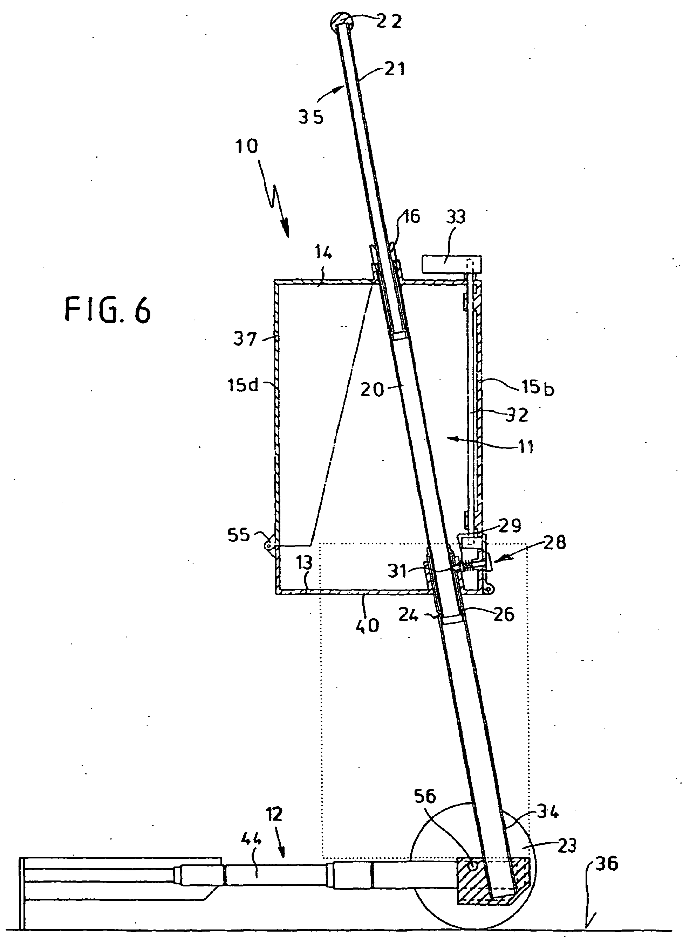

Um das Abteil 11, ausgehend von Fig. 2, von der Ruheposition in eine dem Boden 36 feme Arbeitsposition gemäß Fig. 6 zu bringen, muss der Benutzer am Griffkörper 16 in Ausfahrrichtung A ziehen. Dabei bewegt sich das Abteil 11 in Ausfahrrichtung A entlang der Basisrohre 19 nach oben. Gleichzeitig kann vorteilhafterweise der als Schublade ausgebildete Unterbau 12 von der Rollenachse 27 weg ausgefahren werden, so dass das Abteil 11 stärker abgestützt und gegen Umkippen gesichert ist. Eine derartige Abstützung ist prinzipiell nicht notwendig, jedoch vorteilhaft. Die Arbeitsposition des Abteils 11 ist erreicht, wenn die dem Mittelrohr 20 zugeordnete Widerlagerfläche 26 am Anschlag 24 des Basisrohres anschlägt. Dann nämlich kann das Mittelrohr 20, das bei der Bewegung des Abteils 11 in Ausfahrrichtung A mitbewegt wird, nicht weiter aus dem Basisrohr 19 ausgefahren werden.

Der Zugbügel 35 mit Querstrebe 22 und Kopfrohren 21 kann auch dann noch relativ zum Abteil 11 ausgefahren werden, wenn sich das Abteil in seiner Arbeitsposition befindet. Auf diese Weise kann die Transportvorrichtung 10 auch dann leicht gekippt und in der gekippten Position bequem gefahren werden, wenn das Abteil 11 in seine bodenferne Arbeitsposition hochgefahren ist.

Zur Sicherung des Abteils 11 in seiner Arbeitsposition ist eine Haltevorrichtung 28 vorgesehen. Beim Ausführungsbeispiel ist diese lediglich auf eine sehr einfache, schematische Weise dargestellt. Ein Bolzen 29 ist von einer Feder 30 mit seinem freien Ende gegen den Außenumfang des Mittelrohres 20 beaufschlagt. Da die Haltevorrichtung 28 mit dem Bolzen 29 fest am Abteil 11 angeordnet ist, führt bei einer Relativbewegung des Abteils 11 relativ zum Unterbau 12 das Basisrohr 19 zugleich eine Relativbewegung zu dem Bolzen 29 aus. Im oberen freien Ende des Basisrohres 19 ist eine Bohrung 31 angeordnet, in die der Bolzen 29 eingreift, wenn Bolzen 29 und Bohrung 31 in fluchtende Position miteinander gebracht sind. Dann fungiert der Bolzen 29 als Sperrkörper und verhindert ein Hinabgleiten des Abteils 11 entgegen der Ausfahrrichtung A nach unten. Das Abteil 11 wird auf diese Weise in seiner Arbeitsposition gesichert. Durch die ständige Beaufschlagung des Bolzens 29 zum Basisrohr 19 hin, ist zugleich ein automatischer Rastmechanismus geschaffen, der greift, sobald das Abteil 11 vom Benutzer in seine Arbeitsposition gebracht ist. Damit ist für den Benutzer kein zusätzlicher Handgriff für die Arretierung notwendig.

Zum Lösen der Haltevorrichtung 28 ist beim Ausführungsbeispiel eine Welle 32 vorgesehen, die ein Handhabungsteil 33 derart mit dem Bolzen 28 verbindet, dass eine Betätigung des Handhabungsteils 33 eine Bewegung des Bolzens 29 weg vom Basisrohr 19 zur Folge hat und das Abteil 11 für eine Abwärtsbewegung entgegen der Ausführrichtung A freigibt. Vorteilhafterweise ist das Handhabungsteil 33 in Nähe des Griffkörpers 16 angeordnet, so dass es für den Benutzer bequem erreichbar ist. Es kann aber beispielsweise auch an der Unterseite des Griffkörpers 16, z.B. als Bowdenzug; oder in einer beliebigen anderen Position angebracht sein.

Eine zweite Bohrung 34 ist am Basisrohr 19 an seinem der jeweiligen Rolle 23 nahen Ende angeordnet. Diese dient der Arretierung des Abteils 11 in seiner Ruheposition. Auf diese Weise kann beispielsweise der Zugbügel 35 mit Querstrebe 22, mit Kopfrohr 21 und mit Mittelrohren 20 in eine Position gemäß Fig. 4 ausgefahren werden, wobei ausgeschlossen ist, dass das Abteil 11 mitbewegt wird.

Um einem Benutzer Zugang zu den im Abteil 11 angeordneten Gegenständen zu ermöglichen, ist das Abteil 11 in einen Grundkörper 40 und eine Lade 37 unterteilt. Der als Lade 37 ausgebildete Teil des Abteils 11 ist nach Art eines Flügels vom Grundkörper 40 des Abteils 11 wegklappbar. Die Lade 37 kann zusätzlich, beispielsweise mit Halteelementen 38, am Grundkörper 40 gehalten sein. Als Halteelement 38 kann beispielsweise ein Zugseil verwendet werden, das auf seiner der Lade 37 zugewandten Seite an den Seitenwänden 39 der Lade 37 und an seinem gegenüberliegenden Ende an den Seitenwandbereichen 15c bzw. 15a des Grundkörpers 40 des Abteils 11 befestigt ist.

Weiterhin ist ein in den Zeichnungen nicht gezeigtes Arretierelement wie Schloss vorgesehen, das die Lade 37 am Grundkörper 40 des Abteils 11 sichert. Dieses ist beispielsweise an der Deckenwand 14 angeordnet. Die im Abteil 11 angeordneten Gegenstände können teilweise auch in der Lade 37 angeordnet sein. Gleichzeitig stellt die geöffnete Lade 37 mit der Bodenfläche 41 dem Benutzer eine Arbeitsfläche zur Verfügung.

Halteelemente 38, wie auch die Ausbildung der Lade 37 selbst, sind nur beispielhaft angeführt. Es kann auch daran gedacht werden, geteilte Flügeltüren zu verwenden oder das Abteil 11 nach Art mehrerer übereinanderliegender Schubladen auszubilden.

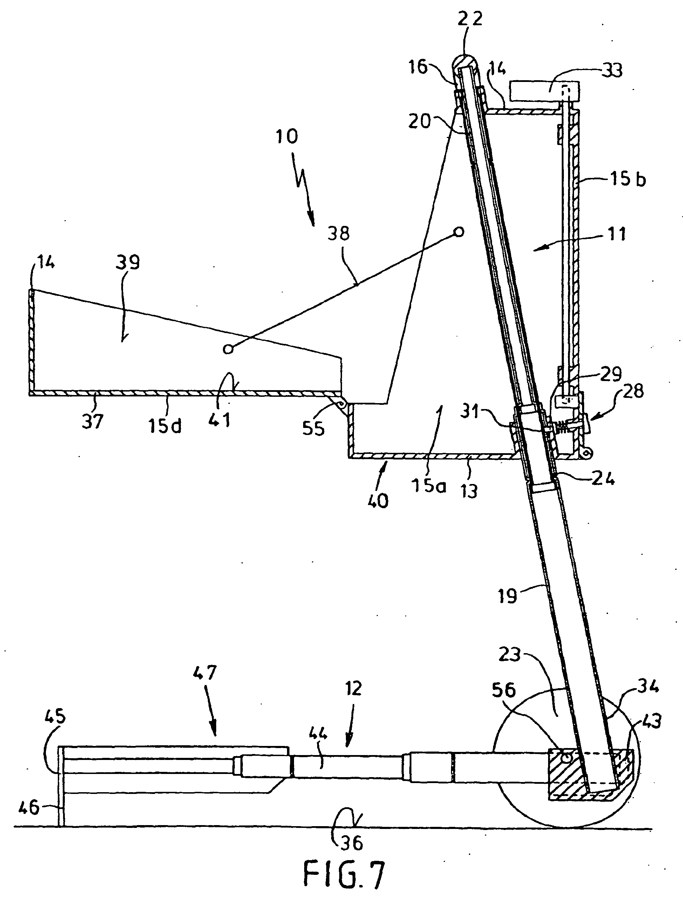

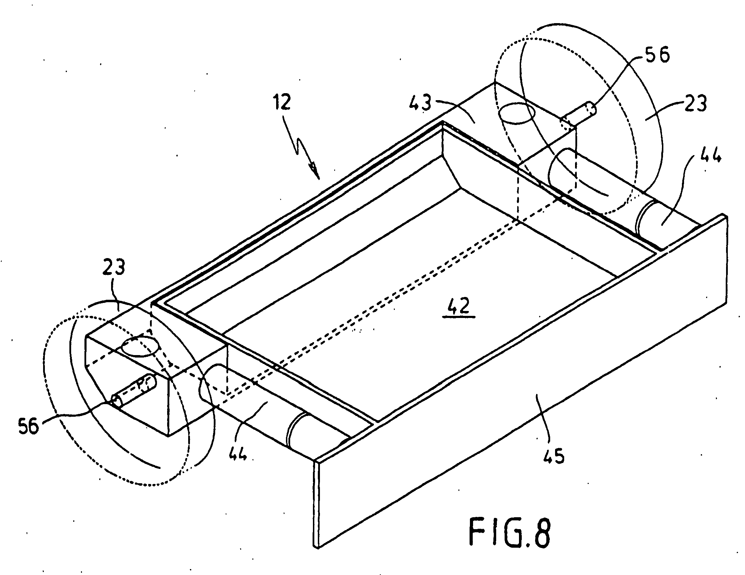

Der in Fig. 8 gezeigte Unterbau 12 ist als Schublade ausgebildet und weist einen Innenraum 42 zur Aufnahme weiterer Gegenstände, beispielsweise von Kleinteilen auf. Längs der Achse 56 der Rollen 23, ist ein Basisträger 43 angeordnet, an dem die Rollen 23 befestigt sind. Seitlich des Innenraumes 42 der Schublade sind sich vom Basisträger 43 quer wegerstreckende Teleskopstangen 44 angeordnet. Diese bestehen jeweils aus mehreren, beim Ausführungsbeispiel aus drei Gliedern, was insbesondere aus Fig. 7 deutlich wird. Der Innenraum 42 wird vorderseitig von einer Leiste 45 abgeschlossen, deren dem Boden 36 naher Rand 46 der Abstützung auf dem Boden 36 dient. Auf diese Weise ist ein sehr stabiler Unterbau 12 geschaffen.

Bei den verschiedenen Ausführungsbeispielen sind gleiche oder vergleichbare bzw. gleichwirkende Elemente mit gleichen Bezugsziffern bezeichnet.

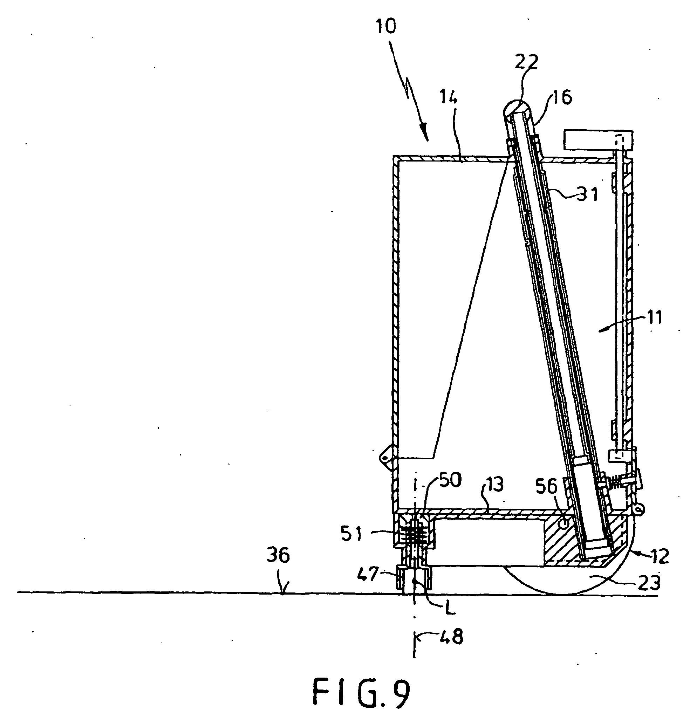

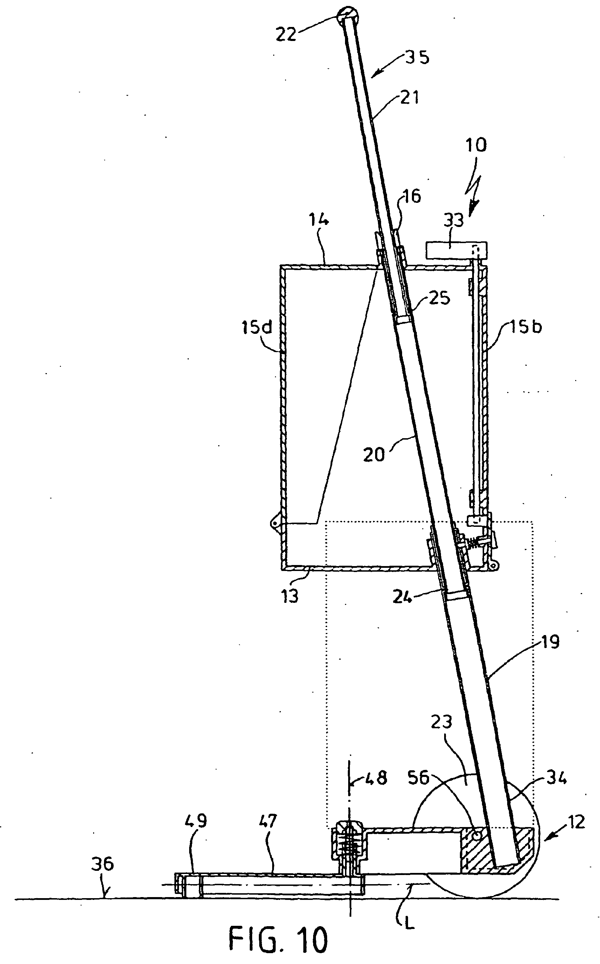

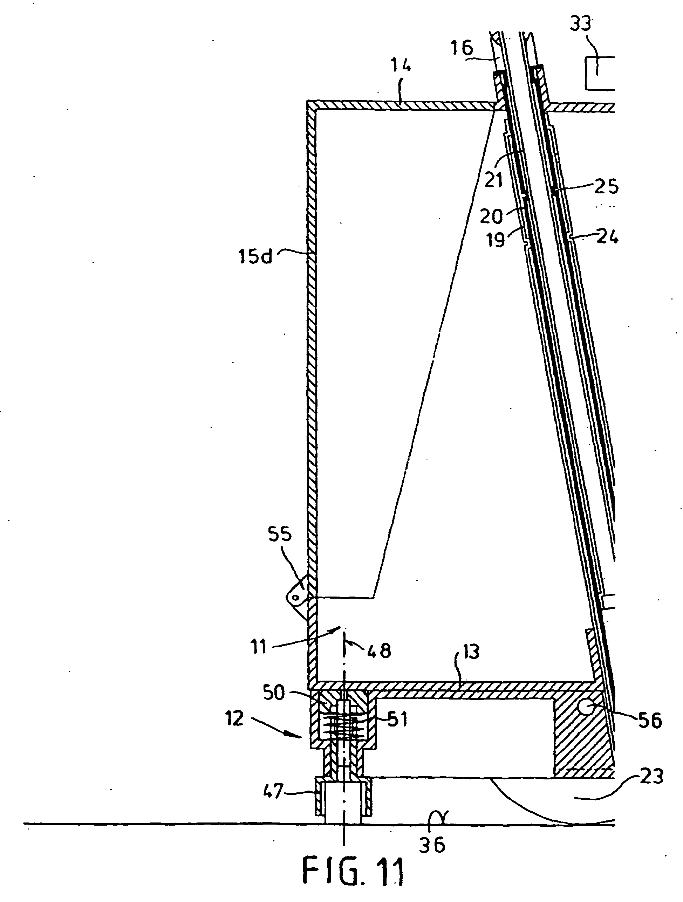

Das Ausführungsbeispiel gemäß den Fig. 9 bis 12 unterscheidet sich vom oben beschriebenen Ausführungsbeispiel durch eine geänderte Ausbildung des Unterbaus 12. Hier sind zwei Stützfüße 47 vorgesehen, die aus einer Ruheposition (Fig. 9) in eine Stützposition (Fig. 10) verschwenkt werden können. Die Stützfüße 47 sind mit jeweils einem Ende am Unterbau 12 angelenkt und um eine Achse 48 schwenkbar, die im wesentlichen eine Normale zum Boden 36 darstellt. Beim Ausführungsbeispiel sind die beiden Stützfüße 47 in den Eckbereichen des Unterbaues 12 angelenkt, so dass ihre freien Enden 49 in der Ruheposition einander gegenüberliegen. Dabei entsprechen die beiden Längsachsen L der Stützfüße 47 einer Geraden, die die beiden Schwenkachsen 48 auf kürzestem Weg miteinander verbindet. Die Ausklappbewegung der Stützfüße 47 in eine Stützposition gemäß Fig. 10 stellt eine Bewegung der Stützfüße 47 in einer Ebene dar. In der Stützposition verlaufen die Längsachsen der beiden Stützfüße 47 im wesentlichen beabstandet parallel zueinander.

Beim Ausführungsbeispiel ist weiterhin ein Mechanismus vorgesehen, der das Ausklappen und das Einklappen der Stützfüße 47 automatisch mit einer Bewegung des Abteils 11 relativ zum Unterbau 12 verbindet. In den Fig. 9 bis 11 ist dafür schematisch ein Stempel 50 dargestellt, der ständig von einer Feder 51 in Richtung der Schwenkachse 48 zum Abteil 11 hin beaufschlagt ist. Eine Translationsbewegung des Stempels 50 wird beispielsweise durch ein Schraubgewinde in eine Schwenkbewegung eines Stützfußes 47 umgelenkt.

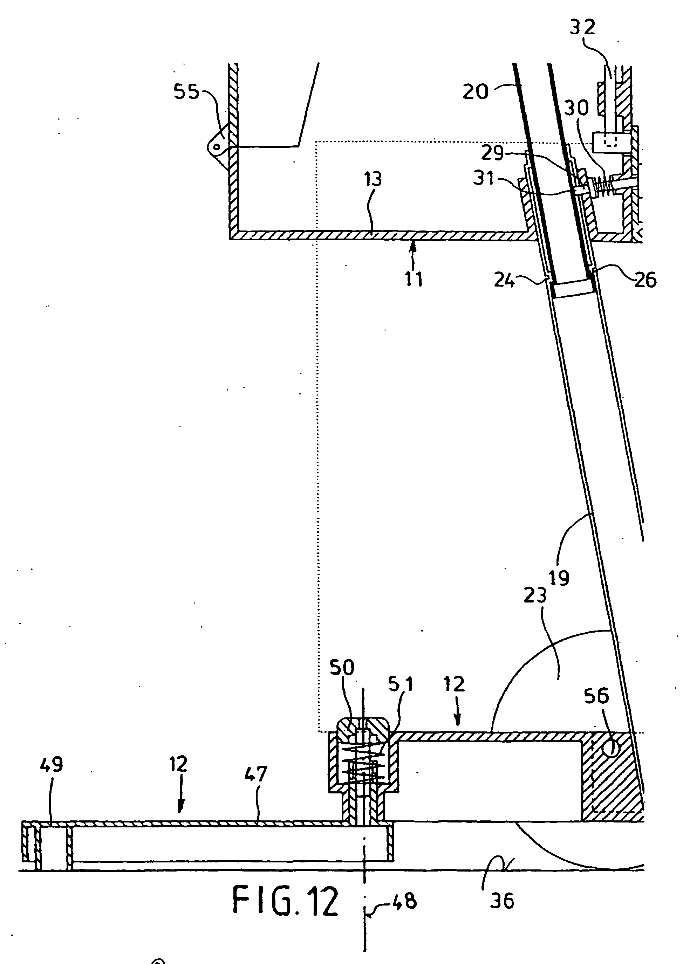

Wird das Abteil 11 aus seiner Ruheposition gemäß Fig. 9 relativ zum Unterbau 12 nach oben bewegt, so wird der Stempel 50 freigegeben. Die Feder 51 kann den Stempel 50 vertikal nach oben verschieben, wodurch der Stützfuß 47 in seine Stützposition gemäß Fig. 12 ausklappt. Wird das Abteil 11 relativ zum Unterbau 12 nach unten bewegt, so trifft kurz vor Erreichen seiner Ruheposition das Abteil 11 mit seiner Bodenwand 13 auf den Stempel 50 und zwingt diesen zu einer Vertikalbewegung nach unten. Diese hat wiederum eine Schwenkbewegung der Stützfüße 47 zur Folge, wobei die Stützfüße 47 nach einwärts in ihre Ruheposition bewegt werden.

Beim Ausführungsbeispiel ist der Griffkörper 16 im Querschnitt teilweise schalenförmig ausgebildet und mit seinen beiden Enden an der Deckenwand 14 des Abteils 11 befestigt. Die obere, konkav gekrümmte Innenumfangsfläche 52 des Griffkörpers 16 entspricht im wesentlichen der Außenumfangsfläche 53 der Querstrebe 22. Auf diese Weise kann bei vollständig eingefahrenem Zugbügel 35 der Griffkörper 16 die Querstrebe 22 nach Art einer Aufnahme teilweise umgreifen. Der Benutzer kann durch Handeingriff in die zwischen Grifflcörper 16 und Deckenwand 14 belassene Öffnung 54 den Griffkörper 16 zusammen mit der Querstrebe 22 umgreifen. Auf diese Weise ist zum einen ein angenehm zu umgreifender Tragegriff aus Griffkörper 16 und Querstrebe 22 für die Transportvorrichtung 10 geschaffen. Zum anderen kann der Benutzer mit dem Tragegriff auch das Abteil 11 relativ zum Unterbau 12 höhenverstellen. Der Zugbügel 35 ist aus dem Tragegriff ausfahrbar, ohne dass ein zusätzliches Betätigungselement notwendig ist. Gleichzeitig dient die Innenumfangsfläche 52 des Griffkörpers 16 als Anschlagfläche für die Querstrebe 22.

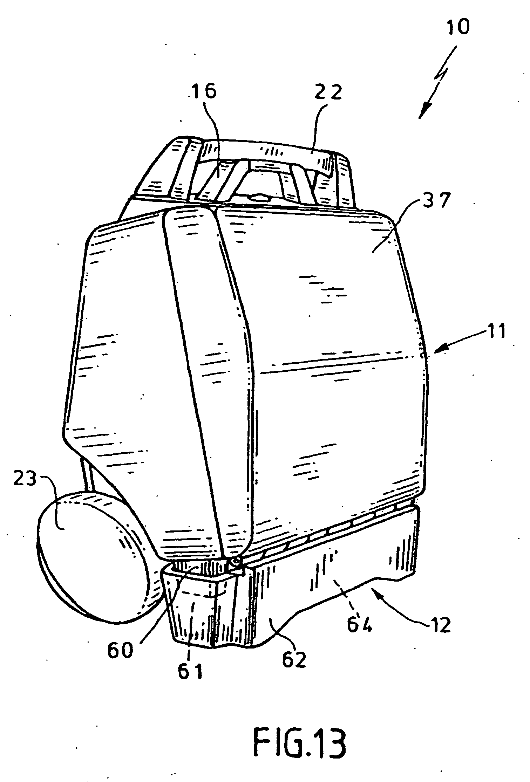

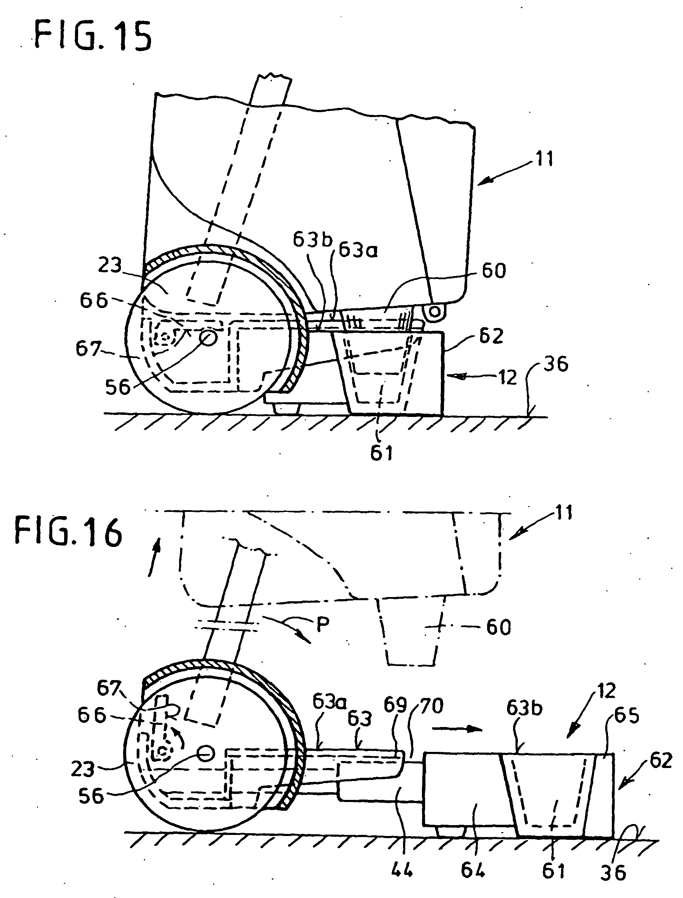

Im folgenden werden einige zusätzliche Details des dritten Ausführungsbeispiels anhand der Fig. 13 bis 16 beschrieben. Bei diesem Ausführungsbeispiel sind an der Unterseite des Abteils 11 zwei besondere Rastmittel 60 nach Art von zwei axial relativ kurzgehaltenen Zapfen vorgesehen. Diese greifen bei in Ruheposition befindlichem Abteil 11, wie insbesondere in den Fig. 13 und 15 deutlich wird, in taschenartig ausgebildete Gegenrastmittel 61 am Unterbau 12 ein. Die Außenflächen der Zapfen 60 und die Innenflächen der Taschen 61 sind im wesentlichen konisch zulaufend trapezförmig ausgebildet. Beim Einstecken der Zapfen 60 in die Taschen 61 gleiten daher die Außenflächen der Zapfen 60 auf den Innenflächen der Taschen 61 auf, bis eine anschlagbildende Sperrwirkung eintritt.

Die Verrastung der Zapfen 60 mit den Taschen 61 ist insbesondere dahingehend vorteilhaft, dass ein Ausziehen des Unterbaus 12 bei miteinander in Eingriff gebrachten Rastmitteln 60 und Gegenrastmitteln 61 verhindert ist. Auf diese Weise kann die Transportvorrichtung 10 beispielsweise nach Art eines Koffers von Hand sicher getragen werden, ohne dass das Risiko besteht, dass der Unterbau 12 sich von selbst löst und ausfährt.

Das in den Fig. 13 bis 16 dargestellte Ausführungsbeispiel weist darüber hinaus noch die Besonderheit auf, dass an dem Unterbau 12 eine Auflagefläche 63 angeordnet ist, auf die Handhabungsgegenstände, insbesondere Werkzeuge, aufgelegt werden können. Die Auflagefläche 63 ist hierbei zweigeteilt, in einen bezüglich der Rollenachse 56 feststehenden, d.h. nicht verlagerbaren Auflageflächenbereich 63a, und einen bezüglich der Rollenachse 56 verlagerbaren, zweiten Auflageflächenbereich 63b. Der verlagerbare Auflageflächenbereich 63b wird dabei von der Oberseite der Decke 65 einer einen Aufnahmeraum für Werkzeuge bildenden Kammer 64 bereitgestellt. Die Kammerdecke 65 kann beispielsweise schwenkbar ausgebildet sein, um Zugriff zu den in der Kammer befindlichen Werkzeugen zu ermöglichen. Dem ausziehbaren Teil 62 des Unterbaus 12, welcher die Kammer 64 und die taschenartigen Gegenrastmittel 61 umfasst, kommt somit neben der bereits von den ersten beiden Ausführungsbeispielen bekannten Funktion der Abstützung und der Aufnahme von Gegenständen nun zusätzlich die Funktion einer Ablage zu. Die Kammerdecke 65 hat darüber hinaus den Vorteil, dass die in der Kammer 64 befindlichen Handhabungsgegenstände durch die Decke 65 zusätzlich geschützt sind.

Eine weitere Besonderheit ergibt sich insbesondere aus der Betrachtung der Fig. 15 und 16. Wie insbesondere Fig. 15 zeigt, befindet sich der feststehende Auflageflächenbereich 63a bei in Ruheposition befindlichem Abteil 11 bezüglich dem verlagerbaren Auflageflächenbereich 63b auf einem anderen vertikalen Niveau. Gemäß Fig. 15 ist in dieser Position der feststehende Auflageflächenbereich 63a oberhalb des verlagerbaren Auflageflächenbereiches 63b angeordnet.

Hier ist nun vorgesehen, dass bei einer Verlagerung des Teils 62 des Unterbaus 12, also bei einer Verlagerung des Teils 62 bezüglich der Fig. 15 und 16 nach rechts, zugleich durch eine zumindest geringfügige Kippbewegung der Transportvorrichtung 10 etwa entlang dem Pfeil P in Fig. 16 bezüglich dem Teil 62 eine durchgehende, im wesentlichen stufenlose Auflagefläche 63 gebildet wird. Die Transportvorrichtung 10 stützt sich dabei mit der Unterseite des bezüglich Fig. 16 rechten Randbereiches 69 des feststehenden Auflageflächenbereiches 63a auf den Teleskopstangen 44 des Unterbaus 12 ab.

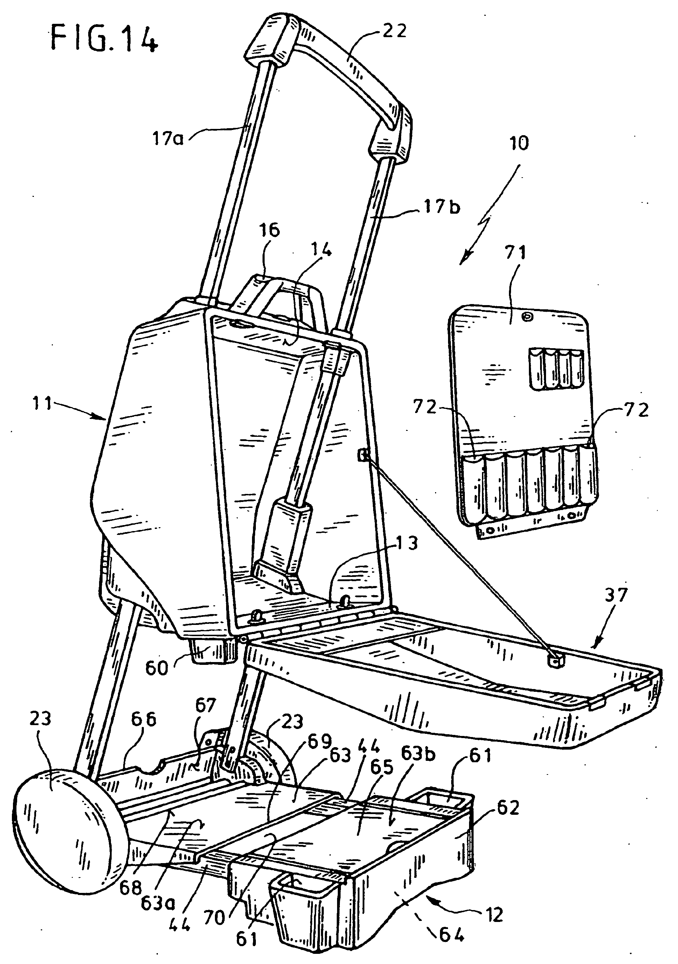

Während der Teil 62 in dem in den Fig. 14 und 16 gezeigten Zustand derartig weit herausgefahren ist, dass zwischen den beiden Auflageflächenbereichen 63a und 63b noch ein Spalt 70 belassen ist, ist in der Praxis vorgesehen, den Teil 62 nur soweit auszuziehen, dass es nicht zu einer Spaltbildung kommt, und die Auflagefläche 63 vollständig durchgehend ist. Dafür können prinzipiell auch nicht dargestellte Rast- oder Anschlagselemente vorgesehen sein, die verhindern, dass das Teil 62 zu weit herausgezogen werden kann.

Um zu verhindem, dass Handhabungsgegenstände von der Auflagefläche 63 herunterfallen oder herunterrutschen, ist am Unterbau 12 im Bereich der Rollenachse 56 ein schwenkbarer Steg 66 angeordnet. Der Steg 66 ist beim Ausführungsbeispiel manuell aus einer im wesentlichen horizontalen Ruheposition (Fig. 15) in eine im wesentlichen vertikale Arbeitsposition (Fig. 16) verschwenkbar. In der Arbeitsposition ist die Haltefläche 67 zur Auflagefläche 63 hin und zu nicht dargestellten, gegebenenfalls auf der Auflagefläche 63 befindlichen Handhabungsgegenständen hin gerichtet. Bevor das Abteil 11 wieder in seine Ruheposition gemäß Fig. 13 verlagert wird, wird der Steg 66 ebenfalls manuell in seine Ruheposition gemäß Fig. 15 verlagert.

Prinzipiell kann auch daran gedacht werden, für die Verschwenkung des Steges 66 einen Automatismus vorzusehen. Dieser kann beispielsweise derart ausgebildet sein, dass der Steg 66 federbelastet ist und die Federkraft den Steg 66 ständig in seine Arbeitsposition zwingt. Bei einer Verlagerung des Abteils 11 in dessen Ruheposition können am Abteil 11 angeordnete Führungsflächen dafür sorgen, dass durch Kontakt der Führungsflächen mit dem Steg 66 dieser automatisch gegen die Wirkung der Federkraft in seine Ruheposition gemäß Fig. 15 zurückkehrt.

Beispielhaft für das Innenleben des Abteils 11 ist in Fig. 14 eine Halterung 71 mit mehreren Taschen 72, beispielsweise zur Aufnahme von Werkzeugen, vorgesehen. Die Halterung 71 kann dabei u.a. beispielsweise an der Deckenwand 14 des Abteils 11 lösbar befestigt werden.

Somit ist eine Transportvorrichtung geschaffen, die viele unterschiedliche Funktionen ausführt und sich auf besonders vorteilhafte Weise als mobile Service-Station verwenden lässt.

## Patentansprüche

1. Transportvorrichtung (10) insbesondere für Handhabungsgegenstände wie Werkzeuge, Messgeräte, Instrumente oder dergleichen, mit zumindest einem Abteil (11) für die zu transportierenden Gegenstände, das von einer Bodenwand (13), Seitenwänden (15a-d) und einer Deckenwand (14) begrenzt ist sowie mit einem wenigstens als bodenseitige Auflage dienenden Unterbau (12) für die Transportvorrichtung, wobei eine Verstellvorrichtung (18) vorgesehen ist, die das Abteil (11) und den Unterbau (12) miteinander verbindet und mittels derer das Abteil (11) relativ zu dem Unterbau (12) aus einer bodennahen Ruheposition in mindestens eine bodenferne Arbeitsposition höhenverstellbar ist, **dadurch gekennzeichnet, dass** etwa mittig an der Deckenwand (14) der Transportvorrichtung (10) ein Griffkörper (16) zum handgetragenen Transport der Transportvorrichtung (10) angeordnet ist, der als Betätigungselement für die Höhenverstellung des Abteils (11) ausgebildet ist.

2. Transportvorrichtung nach Anspruch 1, **dadurch gekennzeichnet, dass** die Verstellvorrichtung (18) wenigstens eine am Unterbau (12) befestigte Tragstange (19) umfasst, an der das Abteil (11) verschiebbar gehalten ist sowie einen Haltemechanismus (28), der das Abteil (11) zumindest in der jeweiligen Arbeitsposition sichert.

3. Transportvorrichtung nach Anspruch 1 oder 2, **dadurch gekennzeichnet, dass** der Haltemechanismus (28) als Rastmechanismus ausgebildet ist, der das Abteil (11) bei Erreichen seiner Arbeitsposition automatisch sichert.

4. Transportvorrichtung nach einem der vorgenannten Ansprüche, **dadurch gekennzeichnet, dass** zwei voneinander beabstandete, parallel zueinander und unter einem spitzen Winkel zum Boden (36) verlaufende Tragstangen (19) vorgesehen sind.

5. Transportvorrichtung nach Anspruch 4, **dadurch gekennzeichnet, dass** die Tragstangen (19) rohrförmig ausgebildet sind und die Verstellvorrichtung (18) zwei Rohre (Mittelrohre 20) umfasst, die jeweils in den Tragstangen (Basisrohre 19) teleskopartig aufgenommen sind, wobei eine Bewegung des Abteils (11) von der Ruhe- in die Arbeitsposition einer Relativbewegung der Mittelrohre (20) zu den Basisrohren (19) entspricht.

6. Transportvorrichtung nach Anspruch 5, **dadurch gekennzeichnet, dass** die Verstellvorrichtung (18) eine durch die Bodenwand (13) der Transportvorrichtung (10) definierte Ebene etwa im Bereich des Bodenwandrandes (57) und eine durch die Deckenwand (14) definierte Ebene etwa im Bereich des Griffkörpers (16) schneidet.

7. Transportvorrichtung nach einem der vorangehenden Ansprüche, **dadurch gekennzeichnet, dass** an dem Unterbau (12) Rollen (23) für einen fahrbaren Transport der Transportvorrichtung (10) angebracht sind und an der Verstellvorrichtung (18) ein Zugelement (35) angeordnet ist.

8. Transportvorrichtung nach Anspruch 7, **dadurch gekennzeichnet, dass** zwei Rollen (23) vorgesehen sind und das Zugelement (35) am oberen freien Ende der Verstellvorrichtung (18) angeordnet ist.

9. Transportvorrichtung nach Anspruch 8, **dadurch gekennzeichnet, dass** in jedem Mittelrohr (20) teleskopartig ein Kopfrohr (21) aufgenommen ist, wobei die beiden Kopfrohre (21) durch eine Querstrebe (22) unter Ausbildung eines Zugbügels (Zugelement 35) U-förmig miteinander verbunden sind und durch Zug an der Querstrebe (22) der Zugbügel (35) relativ zu den Mittelrohren (20) ausfahrbar ist.

10. Transportvorrichtung nach Anspruch 9 **dadurch gekennzeichnet, dass** der Zugbügel (35) in der Arbeitsposition des Abteils (11) ausfahrbar ist.

11. Transportvorrichtung nach einem der vorangehenden Ansprüche, **dadurch gekennzeichnet, dass** der Griffkörper (16) im wesentlichen als Halbschale mit einer dem Außenumfang (53) der Querstrebe (22) zumindest teilweise entsprechenden Innenkontur (52) ausgebildet ist und der Griffkörper (16) die Querstrebe (22) bei eingefahrenem Zugbügel (35) wenigstens teilweise aufnimmt.

12. Transportvorrichtung nach einem der vorangehenden Ansprüche, **dadurch gekennzeichnet, dass** der Unterbau (12) eine Stützvorrichtung mit mindestens einem Stützfuß (47) umfasst.

13. Transportvorrichtung nach Anspruch 12, **dadurch gekennzeichnet, dass** ein Mechanismus vorgesehen ist, der den Stützfuß (47) zumindest bei Verstellung des Abteils (11) aus der Ruhein die Arbeitsposition automatisch betätigt.

14. Transportvorrichtung nach Anspruch 12, **dadurch gekennzeichnet, dass** der Stützfuß (47) teleskopartig aus einer Ruheposition in eine Stützposition ausfahrbar ist.

15. Transportvorrichtung nach Anspruch 14, **dadurch gekennzeichnet, dass** der Unterbau (12) nach Art einer Schublade ausgebildet ist.

16. Transportvorrichtung nach Anspruch 12, **dadurch gekennzeichnet, dass** der Stützfuß (47) aus einer Ruheposition in eine Stützposition ausklappbar ist.

17. Transportvorrichtung nach einem der vorangehenden Ansprüche, **dadurch gekennzeichnet, dass** die Verstellvorrichtung (18) zumindest teilweise innerhalb des Abteils (11) angeordnet ist.

18. Transportvorrichtung nach einem der vorangegangenen Ansprüche, **dadurch gekennzeichnet, dass** am Abteil (11) Rastmittel (60) angeordnet sind, die bei in Ruheposition befindlichem Abteil (11) mit Gegenrastmitteln (61) am Unterbau (12) zusammenwirken.

19. Transportvorrichtung nach Anspruch 18, **dadurch gekennzeichnet, dass** die Rastmittel (60) und die Gegenrastmittel (61) formschlüssig ineinandergreifen.

20. Transportvorrichtung nach Anspruch 19, **dadurch gekennzeichnet, dass** wenigstens ein Teil (62) des Unterbaus (12) zumindest bei in Arbeitsposition befindlichem Abteil (11) ausziehbar ist, und dass die Ausziehbewegung bei in Ruheposition befindlichem Abteil (11) durch die Rastmittel (60) und die Gegenrastmittel (61) verhindert ist.

21. Transportvorrichtung nach Anspruch 20, **dadurch gekennzeichnet, dass** die Rastmittel (60) und/oder die Gegenrastmittel (61) in die Bewegungsbahn des Unterbaus (62, 12) eingreifen.

22. Transportvorrichtung nach einem der vorangegangenen Ansprüche, **dadurch gekennzeichnet, dass** der Unterbau (62, 12) wenigstens eine Auflagefläche (63) für Handhabungsgegenstände aufweist.

23. Transportvorrichtung nach Anspruch 22, **dadurch gekennzeichnet, dass** der Unterbau (12) zumindest einen Auflageflächenbereich (63b) aufweist, der relativ zu der Rollenachse (56) verlagerbar angeordnet ist.

24. Transportvorrichtung nach Anspruch 22 oder 23, **dadurch gekennzeichnet, dass** der Unterbau (12) eine Kammer (64) zur Aufnahme von Werkzeugen umfasst, deren Kammerdecke (65) zumindest einen Teil der Auflagefläche (63, 63b) bereitstellt.

25. Transportvorrichtung nach Anspruch 24, **dadurch gekennzeichnet, dass** die Kammerdecke (65) nach Art einer Verschlussklappe für die Kammer (64) schwenkbar ausgebildet ist.

26. Transportvorrichtung nach einem der Ansprüche 24 bis 25, **dadurch gekennzeichnet, dass** die Kammer (64) zusammen mit einem Teil (62) des Unterbaus (12) ausziehbar ausgebildet ist.

27. Transportvorrichtung nach einem der Ansprüche 22 bis 26, **dadurch gekennzeichnet, dass** der Unterbau (12) zumindest einen Auflageflächenbereich (63a) aufweist, der fest relativ zu der Rollenachse (56) angeordnet ist.

28. Transportvorrichtung nach dem Ansprüchen 23 und 27, **dadurch gekennzeichnet, dass** der feststehende Auflageflächenbereich (63a) zusammen mit dem verlagerbaren Auflageflächenbereich (63b) die Auflagefläche (63) bildet.

29. Transportvorrichtung nach dem Ansprüchen 24 und 28, **dadurch gekennzeichnet, dass** bei vollständig ausgezogener Kammer (64) der feststehende Auflageflächenbereich (63a) zusammen mit der Kammerdecke (65) eine im wesentlichen stufenlose Auflagefläche (63) bildet.

30. Transportvorrichtung nach einem der Ansprüche 22 bis 29, **dadurch gekennzeichnet, dass** in wenigstens einem Randbereich der Auflagefläche (63) ein Steg (66) mit einer Haltefläche (67) vorgesehen ist.

31. Transportvorrichtung nach Anspruch 30, **dadurch gekennzeichnet, dass** der Steg (66) im Bereich einer der Rollenachse (56) benachbarten Kante (68) der Auflagefläche (63) angeordnet ist.

32. Transportvorrichtung nach Anspruch 30 oder 31, **dadurch gekennzeichnet, dass** der Steg (66) schwenkbar an dem Unterbau (12) befestigt ist.

33. Transportvorrichtung nach einem der Ansprüche 30 bis 32, **dadurch gekennzeichnet, dass** der Steg (66) manuell aus einer im wesentlichen horizontalen Ruheposition in eine im wesentlichen vertikale Arbeitsposition verschwenkbar ist.

34. Transportvorrichtung nach einem der Ansprüche 30 bis 32, **dadurch gekennzeichnet, dass** der Steg (66) automatisch bei Verlagerung des Abteils (11) aus dessen Ruheposition in dessen Arbeitsposition und/oder bei Verlagerung aus dessen Arbeitsposition in dessen Ruheposition in seine Arbeitsposition bzw. Ruheposition verschwenkt.

## Claims

1. Transporting device (10), particularly for articles for maintenance purposes such as tools, measuring appliances, instruments or the like, said device having at least one compartment (11) for the items to be transported, which is bounded by a bottom wall (13), side walls (15a-d) and a covering wall (14), and also having a substructure (12) for the transporting device, which substructure serves at least as a support at the bottom end, wherein an adjusting device (18) is provided which connects the compartment (11) and the substructure (12) to one another and by means of which said compartment (11) can be adjusted in height, relative to the substructure (12), out of an inoperative position close to the bottom and into at least one working position remote from the bottom, **characterised in that** there is disposed, approximately centrally on the covering wall (14) of the transporting device (10), a gripping member (16) for the hand-held transport of said transporting device (10), which gripping member is constructed as an actuating element for adjusting the compartment (11) in height.

2. Transporting device according to claim 1, **characterised in that** the adjusting device (18) comprises at least one carrying bar (19) which is fastened to the substructure (12) and on which the compartment (11) is held in a displaceable manner, and also a holding mechanism (28) which secures said compartment (11) at least in the particular working position.

3. Transporting device according to claim 1 or 2, **characterised in that** the holding mechanism (28) is constructed as a latching mechanism which automatically secures the compartment (11) when its working position is reached.

4. Transporting device according to one of the aforementioned claims, **characterised in that** two carrying bars (19) are provided, which are spaced apart from one another and extend parallel to one another and at an acute angle to the floor (36).

5. Transporting device according to claim 4, **characterised in that** the carrying bars (19) are of tubular construction and the adjusting device (18) comprises two tubes (central tubes 20) which are received in a telescope-like manner in the respective carrying bars (base tubes 19), under which circumstances a movement of the compartment (11) from the inoperative position into the working position corresponds to a movement of the central tubes (20) relative to the base tubes (19).

6. Transporting device according to claim 5, **characterised in that** the adjusting device (18) intersects, approximately in the region of the edge (57) of the bottom wall, a plane defined by said bottom wall (13) of the transporting device (10) and, approximately in the region of the gripping member (16), a plane defined by the covering wall (14).

7. Transporting device according to one of the preceding claims, **characterised in that** rollers (23) for the movable transport of the transporting device (10) are fitted to the substructure (12), and a pulling element (35) is disposed on the adjusting device (18).

8. Transporting device according to claim 7, **characterised in that** two rollers (23) are provided and the pulling element (35) is disposed at the upper, free end of the adjusting device (18).

9. Transporting device according to claim 8, **characterised in that** a top tube (21) is received in a telescope-like manner in each central tube (20), the two top tubes (21) being connected to one another in the shape of a U by a transverse strut (22), thereby forming a pulling handle (pulling element 35), and said pulling handle (35) can be extended, relative to the central tubes (20), by pulling on the transverse strut (22).

10. Transporting device according to claim 9, **characterised in that** the pulling handle (35) can be extended when the compartment (11) is in the working position.

11. Transporting device according to one of the preceding claims, **characterised in that** the gripping member (16) is constructed essentially as a half-shell with an inner contour (52) which at least partly corresponds to the outer periphery (53) of the transverse strut (22), and said gripping member (16) at least partly receives the transverse strut (22) when the pulling handle (35) is retracted.

12. Transporting device according to one of the preceding claims, **characterised in that** the substructure (12) comprises a supporting device with at least one supporting foot (47).

13. Transporting device according to claim 12, **characterised in that** a mechanism is provided, which actuates the supporting foot (47) automatically, at least when the compartment (11) is adjusted out of the inoperative position and into the working position.

14. Transporting device according to claim 12, **characterised in that** the supporting foot (47) can be extended out of an inoperative position and into a supporting position in a telescope-like manner.

15. Transporting device according to claim 14, **characterised in that** the substructure (12) is constructed after the fashion of a drawer.

16. Transporting device according to claim 12, **characterised in that** the supporting foot (47) can be folded out of an inoperative position and into a supporting position.

17. Transporting device according to one of the preceding claims, **characterised in that** the adjusting device (18) is disposed at least partly inside the compartment (11).

18. Transporting device according to one of the preceding claims, **characterised in that** there are disposed on the compartment (11), latching means (60) which interact with counter-latching means (61) on the substructure (12) when the compartment (11) is located in the inoperative position.

19. Transporting device according to claim 18, **characterised in that** the latching means (60) and counter-latching means (61) engage in one another in a form-locking manner.

20. Transporting device according to claim 19, **characterised in that** at least part (62) of the substructure (12) can be pulled out, at least when the compartment (11) is located in the working position, and that the pulling-out movement is prevented by the latching means (60) and counter-latching means (61) when the compartment (11) is located in the inoperative position.

21. Transporting device according to claim 20, **characterised in that** the latching means (60) and/or the counter-latching means (61) engage in the path of motion of the substructure (62, 12).

22. Transporting device according to one of the preceding claims, **characterised in that** the substructure (62, 12) has at least one bearing surface (63) for articles for maintenance purposes.

23. Transporting device according to claim 22, **characterised in that** the substructure (12) has at least one region (63b) of the bearing surface which is disposed so as to be capable of being shifted, relative to the spindle (56) of the rollers.

24. Transporting device according to claim 22 or 23, **characterised in that** the substructure (12) has a chamber (64) for receiving tools, the cover (65) of which chamber provides at least part of the bearing surface (63, 63b).

25. Transporting device according to claim 24, **characterised in that** the cover (65) of the chamber is constructed so as to be pivotable after the fashion of a closing flap for said chamber (64).

26. Transporting device according to one of claims 24 to 25, **characterised in that** the chamber (64) is constructed so as to be capable of being pulled out, together with part (62) of the substructure (12).

27. Transporting device according to one of claims 22 to 26, **characterised in that** the substructure (12) has at least one region (63a) of the bearing surface which is disposed in a fixed manner, relative to the spindle (56) of the rollers.

28. Transporting device according to claims 23 and 27, **characterised in that** the bearing surface (63) is formed by the stationary region (63a) of said bearing surface, together with the shiftable region (63b) of said bearing surface.

29. Transporting device according to claims 24 and 28, **characterised in that**, when the chamber (64) is completely pulled out, the stationary region (63a) of the bearing surface forms, together with the cover (65) of said chamber, an essentially continuous bearing surface (63).

30. Transporting device according to one of claims 22 to 29, **characterised in that** a web (66) with a holding surface (67) is provided in at least one edge region of the bearing surface (63).

31. Transporting device according to claim 30, **characterised in that** the web (66) is disposed in the region of an edge (68) of the bearing surface (63) which is adjacent to the spindle (56) of the rollers.

32. Transporting device according to claim 30 or 31, **characterised in that** the web (66) is fastened to the substructure (12) in a pivotable manner.

33. Transporting device according to one of claims 30 to 32, **characterised in that** the web (66) can be swivelled manually out of an essentially horizontal inoperative position and into an essentially vertical working position.

34. Transporting device according to one of claims 30 to 32, **characterised in that** the web (66) automatically swivels into its working position or inoperative position when the compartment (11) is shifted out of its inoperative position and into its working position and/or when it is shifted out of its working position and into its inoperative position.

## Revendications

1. Dispositif de transport (10), en particulier pour des objets de manutention tels que des outils, des appareils de mesure, des instruments ou analogues, comprenant au moins un compartiment (11) pour les objets à transporter, compartiment délimité par une paroi de fond (13), des parois latérales (15a-d) et une paroi de plafond (14), ainsi qu'avec au moins une substructure (12) servant de reposoir côté fond, pour le dispositif de transport, sachant qu'est prévu un dispositif de réglage (18), reliant ensemble le compartiment (11) et la substructure (12) et au moyen duquel le compartiment (11) est réglable en hauteur par rapport à la substructure (12), d'une position de repos, proche du sol, à au moins une position de travail, distante du sol, **caractérisé en ce que**, à peu près au centre sur la paroi de plafond (14) du dispositif de transport (10), est disposé un corps de poignée (16) servant au transport, porté à la main, du dispositif de transport (10), réalisé sous la forme d'élément d'actionnement pour le réglage en hauteur du compartiment (11).

2. Dispositif de transport selon la revendication 1, **caractérisé en ce que** le dispositif de réglage (18) comprend au moins une barre support (19) fixée sur la substructure (12), barre support sur laquelle le compartiment (11) est maintenu de façon déplaçable, ainsi qu'un mécanisme de maintien (28), assurant le compartiment (11) au moins à la position de travail respective.

3. Dispositif de transport selon la revendication 1 ou 2, **caractérisé en ce que** le mécanisme de maintien (28) est réalisé sous la forme de mécanisme à encliquetage assurant automatiquement le compartiment (11) à l'atteinte de sa position de travail.

4. Dispositif de transport selon l'une des revendications précitées, **caractérisé en ce que** sont prévues deux barres support (19) espacées l'une de l'autre, s'étendant parallèlement l'une à l'autre et sous un angle aigu par rapport au sol (36).

5. Dispositif de transport selon la revendication 4, **caractérisé en ce que** les barres support (19) sont de forme tubulaire et le dispositif de réglage (18) comprend deux tubes (tubes médians 20), logés chaque fois de façon télescopique dans les barres support (tubes de base 19), un déplacement du compartiment (11) de la position de repos à la position de travail correspondant à un déplacement relatif des tubes centraux (20) par rapport aux tubes de base (19).

6. Dispositif de transport selon la revendication 5, **caractérisé en ce que** le dispositif de réglage (18) coupe un plan, défini par la paroi de fond (13) du dispositif de transport (10), à peu près dans la zone du bord de paroi de fond (57), et un plan, défini par la paroi de plafond (14), à peu près dans la zone du corps de poignée (16).

7. Dispositif de transport selon l'une des revendications précédentes, **caractérisé en ce que**, sur la substructure (12), sont prévus des galets (23), devant permettre un transport de mobilité du dispositif de transport (10) et, sur le dispositif de réglage (18), est disposé un élément de traction (35).

8. Dispositif de transport selon la revendication 7, **caractérisé en ce que** sont prévus deux galets (23), et l'élément de traction (35) est disposé à l'extrémité libre supérieure du dispositif de réglage (18).

9. Dispositif de transport selon la revendication 8, **caractérisé en ce que**, dans chaque tube médian (20), est logé de façon télescopique un tube de tête (21), les deux tubes de tête (21) étant reliés ensemble en forme de U au moyen d'une entretoise (22), en formant un étrier de traction (élément de traction 35), et étant déployables par rapport aux tubes médians (20), en exerçant une traction sur l'entretoise (22) des étriers de traction (35).

10. Dispositif de transport selon la revendication 9, **caractérisé en ce que** l'étrier de traction (35) est déployable à la position de travail du compartiment (11).

11. Dispositif de transport selon l'une des revendications précédentes, **caractérisé en ce que** le corps de poignée (16) est réalisé sensiblement en forme de demi-coquille, avec un contour intérieur (52) correspondant au moins partiellement à la périphérie extérieure (53) de l'entretoise (22), et le corps de poignée (16) recevant au moins partiellement l'entretoise (22), lorsque l'étrier de traction (35) est rétracté.

12. Dispositif de transport selon l'une des revendications précédentes, **caractérisé en ce que** la substructure (12) comprend un dispositif d'appui ayant au moins un pied d'appui (47).

13. Dispositif de transport selon la revendication 12, **caractérisé en ce qu'**est prévu un mécanisme, actionnant automatiquement le pied d'appui (47), au moins lors du réglage du compartiment (11), de la position de repos à la position de travail.

14. Dispositif de transport selon la revendication 12, **caractérisé en ce que** le pied d'appui (47) est déployable télescopiquement, d'une position de repos en une position d'appui.

15. Dispositif de transport selon la revendication 14, **caractérisé en ce que** la substructure (12) est réalisée à la façon d'un tiroir.

16. Dispositif de transport selon la revendication 12, **caractérisé en ce que** le pied d'appui (47) est déployable par rabattement, d'une position de repos à une position d'appui.

17. Dispositif de transport selon l'une des revendications précédentes, **caractérisé en ce que** le dispositif de réglage (18) est disposé au moins partiellement à l'intérieur du compartiment (11).

18. Dispositif de transport selon l'une des revendications précédentes, **caractérisé en ce que**, sur le compartiment (11), sont disposés des moyens d'encliquetage (60) qui, lorsque le compartiment (11) se trouve en position de repos, coopèrent avec des moyens d'encliquetage conjugués (61), prévus sur la substructure (12).

19. Dispositif de transport selon la revendication 18, **caractérisé en ce que** les moyens d'encliquetage (60) et les moyens d'encliquetage conjugués (61) s'engagent les uns dans les autres, par une liaison à ajustement de forme.

20. Dispositif de transport selon la revendication 19, **caractérisé en ce qu'**au moins une partie (62) de la substructure (12) est extractible, au moins lorsque le compartiment (11) se trouve en position de travail, et **en ce que** le mouvement d'extraction, lorsque le compartiment (11) se trouve en position de repos, est empêché par les moyens d'encliquetage (60) et les moyens d'encliquetage conjugués (61).

21. Dispositif de transport selon la revendication 20, **caractérisé en ce que** les moyens d'encliquetage (60) et/ou les moyens d'encliquetage conjugués (61) s'engagent dans la trajectoire de déplacement de la substructure (62, 12).

22. Dispositif de transport selon l'une des revendications précédentes, **caractérisé en ce que** la substructure (62, 12) présente au moins une surface de pose (63) pour des objets de manutention.

23. Dispositif de transport selon la revendication 22, **caractérisé en ce que** la substructure (12) présente au moins une zone de surface de pose (63b), déplaçable par rapport à l'axe de galet (56).

24. Dispositif de transport selon la revendication 22 ou 23, **caractérisé en ce que** la substructure (12) comprend, pour recevoir des outils, une chambre (64), dont le plafond de chambre (65) fournit au moins une partie de la surface de pose (63, 63b).

25. Dispositif de transport selon la revendication 24, **caractérisé en ce que** le plafond de chambre (65) est réalisé de façon à pouvoir pivoter, à la façon d'un clapet de fermeture pour la chambre (64).

26. Dispositif de transport selon l'une des revendications 24 à 25, **caractérisé en ce que** la chambre (64) est réalisée de façon extractible, conjointement avec une partie (62) de la substructure (12).

27. Dispositif de transport selon la revendication 22 ou 26, **caractérisé en ce que** la substructure (12) présente au moins une zone de surface de pose (63a), disposée rigidement par rapport à l'axe de galet (56).

28. Dispositif de transport selon les revendications 23 et 27, **caractérisé en ce que** la zone de surface de pose (63a) fixe, conjointement avec la zone de surface de pose (63b) déplaçable, forment la surface de pose (63).

29. Dispositif de transport selon les revendications 24 et 28, **caractérisé en ce que**, lorsque la chambre (64) est complètement déployée, la zone de surface de pose (63a), conjointement avec le plafond de chambre (65), forment une face de pose (63) pratiquement sans étagement de discontinuité.

30. Dispositif de transport selon l'une des revendications 22 et 29, **caractérisé en ce que** en au moins une zone de bordure de la surface de pose (63) est prévue une nervure (66) avec une surface de maintien (67).

31. Dispositif de transport selon la revendication 30, **caractérisé en ce que** la nervure (66) est disposée dans la zone d'une arête (68), voisine de l'axe de galet (56), de la surface de pose (63).

32. Dispositif de transport selon la revendication 30 ou 31, **caractérisé en ce que** la nervure (66) est fixée de façon pivotante sur la substructure (12).

33. Dispositif de transport selon l'une des revendications 30 à 32, **caractérisé en ce que** la nervure (66) est susceptible d'être pivotée manuellement, d'une position de repos, sensiblement horizontale, en une position de travail, sensiblement verticale.

34. Dispositif de transport selon l'une des revendications 30 à 32, **caractérisé en ce que**, lors du déplacement du compartiment (11), la nervure (66) est pivotée de sa position de repos à sa position de travail et/ou, en cas de déplacement de sa position de travail à sa position de repos, elle est pivotée à sa position de travail respectivement sa position de repos.
